# EUROPÄISCHE PATENTSCHRIFT

(11) **EP 3 064 392 B1**
(45) Veröffentlichungstag und Bekanntmachung des Hinweises auf die Patenterteilung: **26.08.2020**
(21) Anmeldenummer: 15166403.4
(22) Anmeldetag: 05.05.2015
(51) Int. Cl.: B60K 37/06, B60K 6/22

(54) **KONTROLLVORRICHTUNG FÜR EIN INFORMATIONSWIEDERGABESYSTEM ZUM DARSTELLEN EINES BETRIEBSZUSTANDES EINES HYBRIDFAHRZEUGS, VERFAHREN UND COMPUTERPROGRAMM**
CONTROLLING DEVICE FOR AN INFORMATION DISPLAY SYSTEM FOR DISPLAYING AN OPERATING CONDITION OF A HYBRID VEHICLE, METHOD AND COMPUTER PROGRAM
DISPOSITIF DE CONTRÔLE POUR UN SYSTÈME DE TRANSMISSION D'INFORMATIONS DESTINÉ À REPRÉSENTER UN ÉTAT DE FONCTIONNEMENT D'UN VÉHICULE HYBRIDE, PROCÉDÉ ET PROGRAMME INFORMATIQUE

(30) Priorität: 02.02.2015 DE 102015001169
(43) Veröffentlichungstag der Anmeldung: 07.09.2016
(73) Patentinhaber: Volkswagen Aktiengesellschaft, 38440 Wolfsburg (DE)
(72) Erfinder: Jun, Mi-Ran, 10965 Berlin (DE)

(56) Entgegenhaltungen:
- DE-A1-102010 010 446
- DE-A1-102011 114 392
- JP-A- 2007 237 970
- US-B1- 8 836 544

## Beschreibung

Die vorliegenden Ausführungsbeispiele liegen auf dem Gebiet der Kontrollvorrichtungen für ein Informationswiedergabesystem zum Darstellen eines Betriebszustandes eines Hybridfahrzeugs. Im Kraftfahrzeugbereich können verschiedene Komponenten des Fahrzeugs unterschiedliche Betriebszustände einnehmen, die einem Fahrer des Fahrzeugs auf einer Vielzahl an Instrumenten angezeigt werden können. Hierzu können gemäß einer konventionellen Lösung Instrumente vorgesehen sein, die auf eine bestimmte Funktion ausgelegt sind, wie beispielsweise Tankstandanzeiger oder Tachometer. Diese können allerdings ein hohes Maß an Bauraum beanspruchen und dabei lediglich auf eine Funktion beschränkt sein. Weitere konventionelle Lösungen bieten zudem Anzeigeeinrichtungen, welche mehrere Funktionen wiedergeben können. Hierdurch kann zwar Bauraum eingespart werden, jedoch können häufig nicht alle Funktionen gleichzeitig wiedergegeben werden, was ein manuelles Umschalten erfordern kann. Anderenfalls kann zwar eine Darstellung mehrerer Funktionen möglich sein, jedoch lediglich in einer für den Benutzer unübersichtlichen Art und Weise. Auch jenseits des Fahrzeugbereichs können derartige Probleme bei einer Wiedergabe mehrerer Informationen eine Rolle spielen. Des Weiteren betrifft beispielsweise die DE 10 2011 114 392 A1 eine Anzeigeeinrichtung für ein Fahrzeug mit zumindest zwei unterschiedlichen Antriebsquellen, um unterschiedliche Betriebszustände der Antriebsquellen anzuzeigen. Insbesondere wird der aktuelle Leistungsteil jeder der Antriebsquellen von der aktuellen Gesamt-Antriebsleistung angezeigt. Dazu wird mit der Stellung des Zeigers an einem kreisförmigen Anzeigenbereich des Anzeigeinstruments die Information darüber geliefert, mit welcher aktuellen Gesamtleistung das Fahrzeug betrieben wird. Ferner gibt die Stellung des Zeigers in verschieden indizierten Bereichen desselben kreisförmigen Anzeigenbereichs Auskunft darüber, welcher Motor betrieben wird.

Die US 8 836 544 B1 zeigt den Oberbegriff des Anspruchs 1.

Mithin ist es wünschenswert, ein Konzept für ein Darstellen eines Betriebszustandes eines Hybridfahrzeugs zu verbessern.

Diesem Bedarf tragen eine Kontrollvorrichtung, ein Verfahren und ein Computerprogramm mit den Merkmalen der unabhängigen Patentansprüche Rechnung. Weitere vorteilhafte Ausführungsformen und Weiterbildungen sind Gegenstand der abhängigen Patentansprüche.

Gemäß einem ersten Aspekt beziehen sich Ausführungsbeispiele auf eine Kontrollvorrichtung für ein Informationswiedergabesystem zum Darstellen eines Betriebszustandes eines Hybridfahrzeugs. Die Kontrollvorrichtung umfasst eine Eingangsschnittstelle, die dazu ausgebildet ist, wenigstens ein erstes Betriebssignal, welches Informationen über einen Betriebszustand eines Verbrennungsmotors des Hybridfahrzeugs umfasst, und ein zweites Betriebssignal, welches Informationen über einen Betriebszustand eines Elektromotors des Hybridfahrzeugs umfasst, zu empfangen. Die Kontrollvorrichtung umfasst zudem einen Prozessor, der dazu ausgebildet ist, ein Anzeigesignal derart zu erzeugen, sodass von einer Anzeigeeinrichtung eine Wiedergabe eines kreis- oder ringförmigen Anzeigebereichs bewirkt wird, innerhalb dessen in einem ersten Segment des kreis- oder ringförmigen Anzeigebereichs die Informationen über den Betriebszustand des Verbrennungsmotors und in einem zweiten Segment des kreis- oder ringförmigen Anzeigebereichs die Informationen über den Betriebszustand des Elektromotors dargestellt werden. Ferner ist der Prozessor dazu ausgebildet, das Anzeigesignal derart zu erzeugen, dass eine Drehzahl des Verbrennungsmotors in dem ersten Segment und eine Ladeleistung einer Batterie des Elektromotors in einem ersten Sektor des zweiten Segments dargestellt werden. Die Kontrollvorrichtung umfasst außerdem eine Ausgangsschnittstelle, die dazu ausgebildet ist, das Anzeigesignal an die Anzeigeeinrichtung bereitzustellen. Somit kann es ermöglicht werden, eine Informationsdichte auf einer Anzeigeeinrichtung zu erhöhen, und dabei möglicherweise eine verbesserte Übersichtlichkeit für einen Benutzer zu bieten.

Bei einigen Ausführungsbeispielen ist der Prozessor dazu ausgebildet, das Anzeigesignal derart zu erzeugen, dass eine Darstellung der Informationen über den Betriebszustand des Elektromotors dadurch erfolgt, dass ein von dem Betriebszustand abhängiger Bruchteil des zweiten Segments schattiert wird. Information kann hierdurch auf eine für den Benutzer auffälligere Art dargestellt, oder anders ausgedrückt, besser hervorgehoben werden.

Bei manchen Ausführungsbeispielen ist der Prozessor dazu ausgebildet, das Anzeigesignal derart zu erzeugen, dass das erste Segment und das zweite Segment unmittelbar aneinander angrenzen. So kann es möglich werden, die Informationsdichte auf der Anzeigeeinrichtung weiter zu erhöhen.

Bei einigen Ausführungsbeispielen ist der Prozessor dazu ausgebildet, das Anzeigesignal derart zu erzeugen, dass das erste Segment und/oder das zweite Segment an einem Punkt innerhalb eines Winkelbereichs von höchstens 15° um eine 9-Uhr-Position des Anzeigebereichs begrenzt werden. Eine Anzeige von Information kann somit auf einer für den Benutzer ggf. intuitivere Art erfolgen.

Bei manchen Ausführungsbeispielen ist der Prozessor dazu ausgebildet, das Anzeigesignal derart zu erzeugen, dass eine Ladeleistung einer Batterie des Elektromotors in einem ersten Sektor des zweiten Segments und eine Ausgangsleistung des Elektromotors in einem zweiten Sektor des zweiten Segments dargestellt werden. So kann es möglich werden, die Informationsdichte auf der Anzeigeeinrichtung weiter zu erhöhen.

Bei einigen Ausführungsbeispielen ist der Prozessor dazu ausgebildet, das Anzeigesignal derart zu erzeugen, dass ein von der Ausgangsleistung des Elektromotors abhängiger Bruchteil des zweiten Segments schattiert ist, und eine Darstellung der Ladeleistung der Batterie des Elektromotors mit einem durch eine Mehrzahl von Strichmarkierungen dargestellten, diskretisierten Kreisringsegment erfolgt. Unterschiedliche Informationen können somit leichter aufgrund ihrer verschiedenen Darstellungsformen voneinander abgegrenzt werden, was dem Benutzer unter Umständen eine Übersicht erleichtern kann.

Bei manchen Ausführungsbeispielen ist der Prozessor dazu ausgebildet, das Anzeigesignal derart zu erzeugen, dass eine entlang eines radial äußeren Perimeters des Anzeigebereichs liegende Skala einen zwischen einem Anfangspunkt und einem Endpunkt der Skala gelegenen Mittelpunkt aufweist, welcher eine maximale Ausgangsleistung des Elektromotors und einen Nullpunkt einer Drehzahl des Verbrennungsmotors markiert. Dabei zeigt ein Zeiger wenigstens die Höhe der Ausgangsleistung des Elektromotors mithilfe der Skala an. Außerdem erstreckt sich eine Schattierung eines von der Ausgangsleistung des Elektromotors abhängigen Bruchteils des zweiten Sektors von dem Anfangspunkt bis zu dem Zeiger, höchstens aber bis zu dem Mittelpunkt. Zudem zeigt der Zeiger durch ein Überschreiten des Mittelpunktes ein zusätzliches Zuschalten des Verbrennungsmotors bei der maximalen Ausgangsleistung des Elektromotors, und eine Drehzahl des Verbrennungsmotors mithilfe der Skala an. So kann es möglich werden, die Informationsdichte auf der Anzeigeeinrichtung weiter zu erhöhen, und die Übersicht für den Benutzer womöglich intuitiver zu gestalten.

Bei einigen Ausführungsbeispielen ist der Prozessor dazu ausgebildet, das Anzeigesignal derart zu erzeugen, eine Ausgangsleistung des Elektromotors in einem zweiten Sektor des zweiten Segments dargestellt werden. Dabei überlappen sich das erste Segment und der zweite Sektor des zweiten Segments wenigstens teilweise. Auf diese Weise kann möglicherweise die Informationsdichte auf der Anzeigeeinrichtung weiter erhöht werden.

Bei manchen Ausführungsbeispielen ist der Prozessor dazu ausgebildet, das Anzeigesignal derart zu erzeugen, dass die Drehzahl des Verbrennungsmotors vermittels eines Zeigers und einer entlang eines radial äußeren Perimeters des Anzeigebereichs liegenden Skala, und eine gleichzeitige Beschleunigung mithilfe des Elektromotors durch eine innerhalb des äußeren Perimeters angeordneten Schattierung zwischen einer Nullmarkierung der Skala und dem Zeiger angezeigt werden. Auf diese Weise kann möglicherweise die Informationsdichte auf der Anzeigeeinrichtung weiter erhöht werden.

Gemäß einem weiteren Aspekt beziehen sich Ausführungsbeispiele auf eine Kontrollvorrichtung für ein Informationswiedergabesystem zum Darstellen eines Betriebszustandes eines Hybridfahrzeugs. Die Kontrollvorrichtung umfasst eine Eingangsschnittstelle, die dazu ausgebildet ist, wenigstens ein erstes Betriebssignal, welches Informationen über einen Betriebszustand eines Verbrennungsmotors des Hybridfahrzeugs umfasst, und ein zweites Betriebssignal, welches Informationen über einen Betriebszustand eines Elektromotors des Hybridfahrzeugs umfasst, zu empfangen. Die Kontrollvorrichtung umfasst zudem einen Prozessor, der dazu ausgebildet ist, ein Anzeigesignal derart zu erzeugen, sodass von einer Anzeigeeinrichtung eine Wiedergabe eines kreis- oder ringförmigen Anzeigebereichs bewirkt wird, innerhalb dessen in einem gemeinsamen Segment des kreis- oder ringförmigen Anzeigebereichs die Informationen über den Betriebszustand des Verbrennungsmotors und die Informationen über den Betriebszustand des Elektromotors dargestellt werden. Die Kontrollvorrichtung umfasst außerdem eine Ausgangsschnittstelle, die dazu ausgebildet ist, das Anzeigesignal an die Anzeigeeinrichtung bereitzustellen. Somit kann es ermöglicht werden, eine Informationsdichte auf einer Anzeigeeinrichtung zu erhöhen, und dabei möglicherweise eine verbesserte Übersichtlichkeit für einen Benutzer zu bieten.

Bei einigen Ausführungsbeispielen ist der Prozessor dazu ausgebildet, das Anzeigesignal derart zu erzeugen, dass die Drehzahl des Verbrennungsmotors vermittels eines Zeigers und einer entlang eines radial äußeren Perimeters des gemeinsamen Segments liegenden Skala, und eine gleichzeitige Beschleunigung mithilfe des Elektromotors durch eine innerhalb des äußeren Perimeters angeordneten Schattierung zwischen einer Nullmarkierung der Skala und dem Zeiger angezeigt werden. So kann es möglich werden, die Informationsdichte auf der Anzeigeeinrichtung weiter zu erhöhen, und die Übersicht für den Benutzer womöglich intuitiver zu gestalten.

Bei manchen Ausführungsbeispielen ist der Prozessor dazu ausgebildet, das Anzeigesignal derart zu erzeugen, dass das gemeinsame Segment einen ersten Teilbereich und einen an einem Übergangspunkt an den ersten Teilbereich angrenzenden zweiten Teilbereich aufweist. Dabei markiert der Übergangspunkt eine maximale Ausgangsleistung des Elektromotors und einen Nullpunkt einer Drehzahl des Verbrennungsmotors. Außerdem zeigt ein Zeiger wenigstens die Höhe der Ausgangsleistung des Elektromotors mithilfe einer Skala entlang des gemeinsamen Segments an. Zudem erstreckt sich eine Schattierung eines von der Ausgangsleistung des Elektromotors abhängigen Bruchteils des zweiten Teilbereichs von einem Anfangspunkt des zweiten Teilbereichs bis zu dem Zeiger oder dem Übergangspunkt. Weiterhin zeigt der Zeiger durch ein Überschreiten des Übergangspunktes ein zusätzliches Zuschalten des Verbrennungsmotors bei der maximalen Ausgangsleistung des Elektromotors, und eine Drehzahl des Verbrennungsmotors mithilfe der Skala an. So kann es möglich werden, die Informationsdichte auf der Anzeigeeinrichtung weiter zu erhöhen, und die Übersicht für den Benutzer womöglich intuitiver zu gestalten.

Bei einigen Ausführungsbeispielen ist der Prozessor dazu ausgebildet, das Anzeigesignal derart zu erzeugen, dass ein Ladezustand einer Batterie des Elektromotors in einem eine 6-Uhr-Position des Anzeigebereichs umfassenden Teilbereich angezeigt wird. Auf diese Weise kann möglicherweise die Informationsdichte auf der Anzeigeeinrichtung weiter erhöht werden.

Gemäß einem noch weiteren Aspekt beziehen sich Ausführungsbeispiele auf ein Verfahren zum Darstellen eines Betriebszustandes eines Hybridfahrzeugs. Das Verfahren umfasst ein Empfangen wenigstens eines ersten Betriebssignals, welches Informationen über einen Betriebszustand eines Verbrennungsmotors des Hybridfahrzeugs umfasst, und eines zweiten Betriebssignals, welches Informationen über einen Betriebszustand eines Elektromotors des Hybridfahrzeugs umfasst. Das Verfahren umfasst zudem ein Erzeugen eines Anzeigesignals derart, sodass von einer Anzeigeeinrichtung eine Wiedergabe eines kreis- oder ringförmigen Anzeigebereichs bewirkt wird, innerhalb dessen in einem ersten Segment des kreis- oder ringförmigen Anzeigebereichs die Informationen über den Betriebszustand des Verbrennungsmotors und in einem zweiten Segment des kreis- oder ringförmigen Anzeigebereichs die Informationen über den Betriebszustand des Elektromotors dargestellt werden. Das Verfahren umfasst weiterhin ein Bereitstellen eines Anzeigesignals an die Anzeigeeinrichtung. Somit kann es ermöglicht werden, eine Informationsdichte auf einer Anzeigeeinrichtung zu erhöhen, und dabei möglicherweise eine verbesserte Übersichtlichkeit für einen Benutzer zu bieten.

Darüber hinaus schaffen weitere Ausführungsbeispiele auch ein Programm oder Computerprogramm mit einem Programmcode zum Durchführen eines der genannten Verfahren, wenn der Programmcode auf einem Computer, einem Prozessor oder einer programmierbaren Hardwarekomponente, wie z.B. einer applikationsspezifischen integrierten Schaltung (ASIC), ausgeführt wird.

Nachfolgend werden unter Bezugnahme auf die beigefügten Figuren einige exemplarische Ausführungsbeispiele näher beschrieben und erläutert. Es zeigen im Einzelnen:
- Fig. 1: ein Blockdiagramm einer Kontrollvorrichtung gemäß einem Ausführungsbeispiel;
- Fign. 2 bis 11: Darstellungen von Informationen über Betriebszustände eines Elektromotors und eines Verbrennungsmotors in verschiedenen Betriebsmodi vermittels einem gemäß einem Ausführungsbeispiel erzeugten Anzeigesignal; und
- Fign. 12 und 13: Darstellungen von Informationen über Betriebszustände eines Elektromotors und eines Verbrennungsmotors in verschiedenen Betriebsmodi vermittels einem gemäß einem weiteren Ausführungsbeispiel erzeugten Anzeigesignal; und
- Fig. 14: ein Ablaufdiagramm eines Verfahrens gemäß einem Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "gekoppelt" bezeichnet wird, mit dem anderen Element direkt verbunden oder gekoppelt sein kann oder dass dazwischenliegende Elemente vorhanden sein können. Wenn ein Element dagegen als "direkt verbunden" oder "direkt gekoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der", "die", "das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist" und/oder "aufweisend", "umfasst" und/oder "umfassend" wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

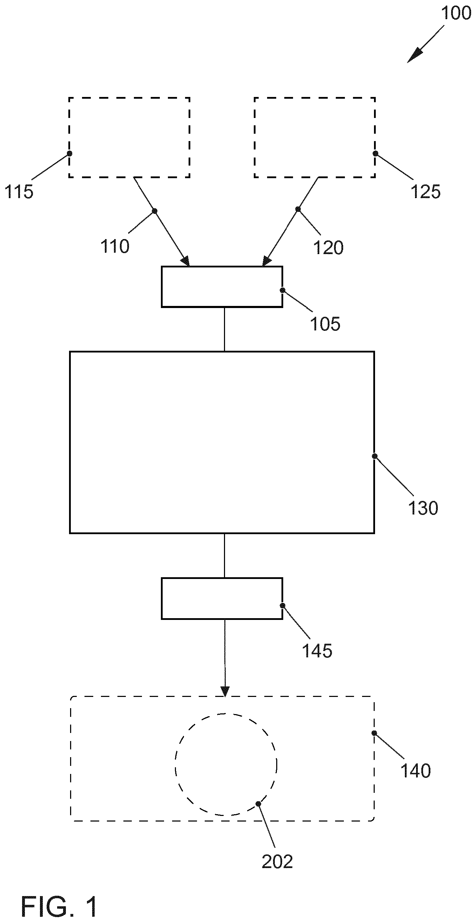

Fig. 1 zeigt eine Kontrollvorrichtung 100 für ein Informationswiedergabesystem zum Darstellen eines Betriebszustandes eines Hybridfahrzeugs gemäß einem Ausführungsbeispiel. Optional vorhandene Komponenten sind darin gestrichelt dargestellt. Die Kontrollvorrichtung 100 umfasst eine Eingangsschnittstelle 105, die dazu ausgebildet ist, wenigstens ein erstes Betriebssignal 110, welches Informationen über einen Betriebszustand eines Verbrennungsmotors 115 des Hybridfahrzeugs umfasst, und ein zweites Betriebssignal 120, welches Informationen über einen Betriebszustand eines Elektromotors 125 des Hybridfahrzeugs umfasst, zu empfangen. Die Kontrollvorrichtung 100 umfasst zudem einen Prozessor 130, der dazu ausgebildet ist, ein Anzeigesignal 135 derart zu erzeugen, sodass von einer Anzeigeeinrichtung 140 eine Wiedergabe eines kreis- oder ringförmigen Anzeigebereichs 202 bewirkt wird, innerhalb dessen in einem ersten Segment des kreis- oder ringförmigen Anzeigebereichs 202 die Informationen über den Betriebszustand des Verbrennungsmotors 115 und in einem zweiten Segment des kreis- oder ringförmigen Anzeigebereichs 202 die Informationen über den Betriebszustand des Elektromotors 125 dargestellt werden. Die Kontrollvorrichtung 100 umfasst außerdem eine Ausgangsschnittstelle 145, die dazu ausgebildet ist, das Anzeigesignal 135 an die Anzeigeeinrichtung 140 bereitzustellen. Somit kann es ermöglicht werden, eine Informationsdichte auf der Anzeigeeinrichtung 140 zu erhöhen, und dabei möglicherweise eine verbesserte Übersichtlichkeit für einen Benutzer zu bieten.

Die Eingangsschnittstelle 105 und die Ausgangsschnittstelle 145 sind dabei mit dem Prozessor 130 gekoppelt, oder von dem Prozessor 130 umfasst. Die Anzeigeeinrichtung 140 kann einen Bildschirm aufweisen, und z. B. ein von dem Fahrzeug umfasstes Bordinstrument oder Kombinationsinstrument sein. Dieses kann z. B. hinter einem Lenkrad des Fahrzeugs angeordnet sein.

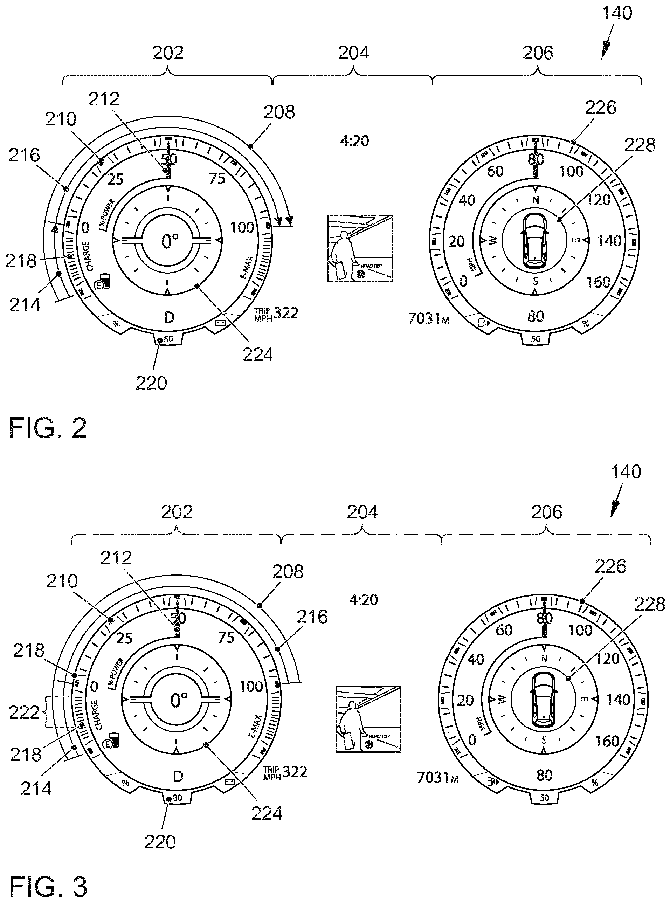

Fign. 2 bis 11 zeigen die Anzeigeeinrichtung 140 der Fig. 1 in detaillierter Ansicht, bei der der kreis- oder ringförmige Anzeigebereich 202 als linksseitiges Rundinstrument dargestellt ist. Ferner gibt es einen mittleren Bereich 204 und einen (in Fig. 2 rechts liegenden) weiteren Bereich 206. Die Darstellung der Betriebszustände von Elektromotor und/oder Verbrennungsmotor erfolgt in einem ringförmigen Teil des Rundinstruments, welcher sich radial von etwa dem halben Radius des Rundinstruments bis zum vollen Radius des Rundinstruments erstreckt.

Komponenten oder Merkmale, die eine Entsprechung in einer vorangegangenen Figur haben, tragen hierin dieselben Bezugszeichen und sind in den nachfolgenden Figuren nicht nochmals erklärt. Vielmehr wird lediglich auf die Unterschiede eingegangen.

Die einzelnen Fign. 2 bis 11 geben unterschiedliche Betriebsmodi wieder, welche dem Fahrer des Hybridfahrzeugs gestatten können, einen vereinfachten Überblick zu bekommen, welcher Motor zu einem Zeitpunkt aktiv ist, und wie das Fahrzeug aktuell betrieben wird. Fign. 2 bis 4 zeigen einen Elektromodus (engl. "e-Mode"), bei dem lediglich der Elektromotor das Fahrzeug antreiben kann. Dementsprechend kann das erste Segment des Anzeigebereichs 202 bei diesem Ausführungsbeispiel ausgeblendet, und lediglich das zweite Segment 208 angezeigt werden. Das zweite Segment erstreckt sich etwa von einer 8-Uhr-Position bis etwa zu einer 3-Uhr-Position. Der Begriff "etwa" bezeichnet im Folgenden beispielsweise, dass eine Abweichung zwischen -15° und +15° von der genauen Position vorliegen kann.

Bei manchen Ausführungsbeispielen ist der Prozessor dazu ausgebildet, das Anzeigesignal derart zu erzeugen, dass der kreis- oder ringförmige Anzeigebereich 202 wenigstens eine entlang einer Umfangsrichtung verlaufende Skala 210 aufweist; und dass die Informationen über den Betriebszustand des Verbrennungsmotors und/oder des Elektromotors entlang der Skala 210 darstellbar sind. Auch kann der Prozessor dazu ausgebildet sein, das Anzeigesignal derart zu erzeugen, dass eine Darstellung der Informationen über den Betriebszustand des Verbrennungsmotors oder des Elektromotors mit einem Zeiger 212 erfolgt.

In Fign. 2 bis 4 zeigt das zweite Segment 208 in einem Bereich etwa zwischen der 8-Uhr-Position und einer 9-Uhr-Position eine Ladeleistung einer Batterie des Elektromotors. Zudem ist bei manchen Ausführungsbeispielen der Prozessor dazu ausgebildet, das Anzeigesignal derart zu erzeugen, dass die Ladeleistung einer Batterie des Elektromotors in einem ersten Sektor 214 des zweiten Segments 208 und eine Ausgangsleistung des Elektromotors in einem zweiten Sektor 216 des zweiten Segments 208 dargestellt werden. Der zweite Sektor 216 erstreckt sich dabei etwa von der 9-Uhr-Position bis zu der 3-Uhr-Position. Anders ausgedrückt grenzen der erste Sektor 214 und der zweite Sektor 216 an einem Punkt innerhalb eines Winkelbereichs von höchstens 15° um eine 9-Uhr-Position des Anzeigebereichs aneinander. Die Skala 210 zeigt entlang des zweiten Sektors 216 Werte in Form von Prozentangaben von 0 bis 100, und der Zeiger 212 zeigt eine aktuell vorliegende Ausgangsleistung auf diesem Skalenbereich an. Die Skala 210 zeigt entlang des ersten Sektors 214 eine Mehrzahl von Strichmarkierungen 218. Eine Hervorhebung durch Schattierung, Beleuchtung oder farbige Hinterlegung einzelner Strichmarkierungen aus der Mehrzahl von Strichmarkierungen 218 zeigt dabei eine aktuelle Ladeleistung der Batterie an. Bei einigen Ausführungsbeispielen ist der Prozessor dazu ausgebildet, das Anzeigesignal derart zu erzeugen, dass ein Ladezustand einer Batterie des Elektromotors in einem eine 6-Uhr-Position des Anzeigebereichs umfassenden Teilbereich 220 angezeigt wird. In Fign. 2 bis 4 beträgt dieser beispielsweise 80 Prozent. Ferner kann der Betriebsmodus, der aktuell vorliegt, durch ein Batteriesymbol mit dem Buchstaben "E" in dem ersten Sektor 214 angezeigt sein.

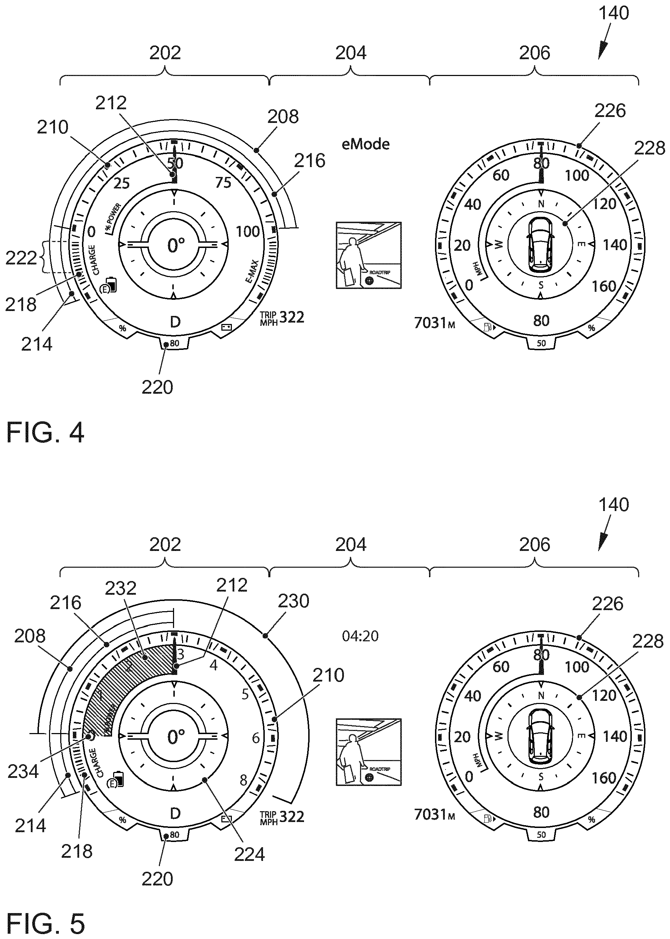

Fig. 2 zeigt einen Betriebszustand, bei dem keine Ladeleistung vorliegt, und keine der Strichmarkierungen 218 des ersten Sektors 214 hervorgehoben ist. Bei Fig. 3 wird, beispielsweise durch Abbremsen, eine Ladeleistung erzeugt, und eine der Ladeleistung entsprechende Teilmenge der Strichmarkierungen 222 hervorgehoben. Bei Fig. 4 lässt die Abbremsung durch Verringerung der Bremskraft nach, und die Teilmenge der Strichmarkierungen 222 wird geringer.

Das Rundinstrument 202 weist außerdem einen kreisförmigen Innenbereich 224 auf, in dem eine weitere Information über einen Fahr- oder Betriebszustand des Fahrzeugs dargestellt sein kann. Dies ist in Fign. 2 bis 11 beispielsweise eine Straßenneigung, welche durch eine weitere Skala entlang des kreisförmigen Innenbereichs visualisiert, und durch eine Angabe in Grad im Zentrum des kreisförmigen Innenbereichs angezeigt wird.

In dem weiteren Bereich 206 der Anzeigeeinrichtung kann ein weiteres Rundinstrument dargestellt sein. Dies kann beispielsweise auf einem ringförmigen Außenbereich 226 einen Tachometer mit einer außen liegenden Skala (z.B. Kilometer pro Stunde, km/h oder Meilen pro Stunde, mph) zeigen, und in einem konzentrisch zu dem Außenbereich angeordneten inneren Kreisbereich 228 eine Himmelsrichtung, in die das Fahrzeug aktuell orientiert ist. Eine aktuelle Geschwindigkeit des Fahrzeugs kann mittels eines Zeigers und optional auch digital an einer 6-Uhr-Position des Außenbereichs angezeigt werden. Ferner kann ein Randbereich an einem unteren Rand vorhanden sein, welcher radial nochmals außerhalb des Außenbereichs liegt, und einen Tankfüllstand anzeigt. In dem mittleren Bereich 204 der Anzeigeeinrichtung können weitere Informationen abgebildet sein, beispielsweise ein aktuell vorliegender Betriebsmodus des Hybridfahrzeugs, eine Uhrzeit, ein Fahrzeugtyp oder ein Emblem eines Fahrzeugherstellers, Softwareanbieters oder Dienstleisters.

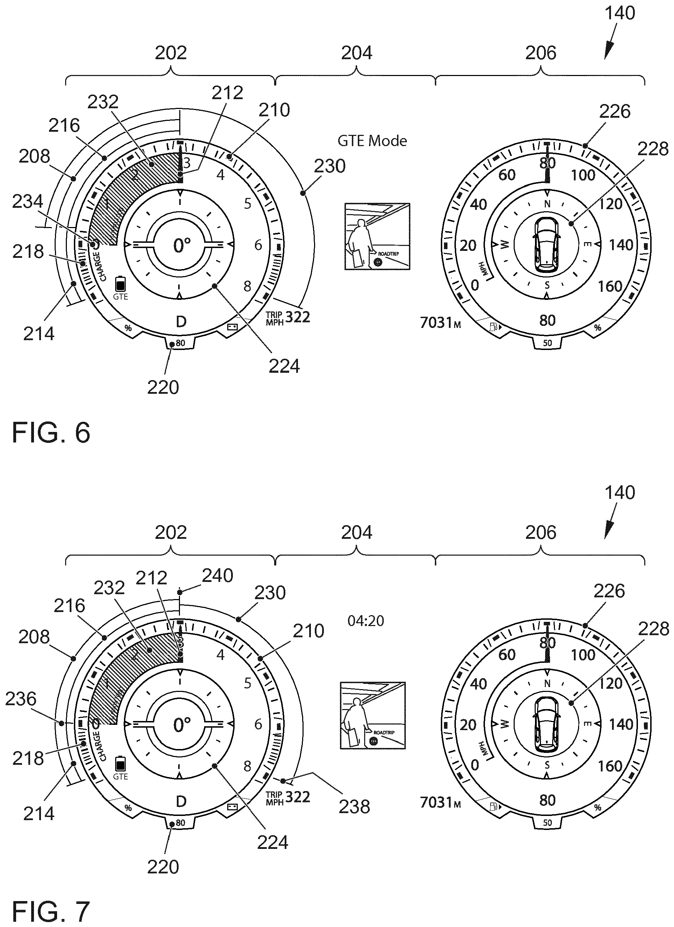

Fign. 5 und 6 zeigen einen Elektromodus (engl. "e-Mode"), bei dem der Elektromotor einen durch den Verbrennungsmotor erzeugten Antrieb oder eine Beschleunigung des Fahrzeugs unterstützen kann. Hierzu wird das erste Segment 230 in dem Anzeigebereich 202 eingeblendet, in welchem die Information über den Betriebszustand des Verbrennungsmotors dargestellt wird. Das erste Segment 230 erstreckt sich hierbei etwa von der 9-Uhr-Position bis zu einer 4-Uhr-Position. Der Prozessor ist dazu ausgebildet, das Anzeigesignal derart zu erzeugen, dass eine Drehzahl des Verbrennungsmotors in dem ersten Segment 230 dargestellt wird. Die Skala 210 gibt entlang des ersten Segments 230 eine Drehzahl zwischen 0 und 8 in Einheiten von 1000 Umdrehungen pro Minute (rpm) an.

Bei den in Fig. 5 und 6 verdeutlichten Ausführungsbeispielen ist der Prozessor dazu ausgebildet, das Anzeigesignal derart zu erzeugen, dass eine Drehzahl des Verbrennungsmotors in dem ersten Segment 230, eine Ladeleistung einer Batterie des Elektromotors in dem ersten Sektor 214 des zweiten Segments 208, und eine Ausgangsleistung des Elektromotors in dem zweiten Sektor 216 des zweiten Segments 208 dargestellt werden. Dabei überlappen sich das erste Segment 230 und der zweite Sektor 216 des zweiten Segments 208 wenigstens teilweise. Auf diese Weise kann möglicherweise die Informationsdichte auf der Anzeigeeinrichtung weiter erhöht werden.

Optional kann der Prozessor dazu ausgebildet sein, das Anzeigesignal derart zu erzeugen, dass eine Darstellung der Informationen über den Betriebszustand des Elektromotors dadurch erfolgt, dass ein von dem Betriebszustand abhängiger Bruchteil 232 des zweiten Segments 208 schattiert wird. Das Schattieren kann hierbei durch einen Helligkeitsunterschied gegenüber dem Hintergrund oder eine farbige Markierung erfolgen. Der Bruchteil 232 folgt dabei dem Verlauf eines zusammenhängenden Kreisringsektors.

Bei manchen Ausführungsbeispielen ist der Prozessor dazu ausgebildet, das Anzeigesignal derart zu erzeugen, dass die Drehzahl des Verbrennungsmotors vermittels des Zeigers 212 und der entlang eines radial äußeren Perimeters des Anzeigebereichs 202 liegenden Skala 210, und eine gleichzeitige Beschleunigung mithilfe des Elektromotors durch eine innerhalb des äußeren Perimeters angeordneten Schattierung zwischen einer Nullmarkierung 234 der Skala 210 und dem Zeiger 212 angezeigt werden. Auf diese Weise kann möglicherweise die Informationsdichte auf der Anzeigeeinrichtung weiter erhöht werden.

Anders ausgedrückt kann die Schattierung des Bruchteils 232 des zweiten Segments 208, wie in Fig. 5 dargestellt, anzeigen, dass zusätzlich zu der durch den Verbrennungsmotor erzeugten Leistung der Elektromotor eine Beschleunigung unterstützt.

Ferner ist der Prozessor dazu ausgebildet, das Anzeigesignal derart zu erzeugen, dass der von der Ausgangsleistung des Elektromotors abhängige Bruchteil 232 des zweiten Segments 208 schattiert ist, und eine Darstellung der Ladeleistung der Batterie des Elektromotors mit einem durch die Mehrzahl von Strichmarkierungen 218 dargestellten, diskretisierten Kreisringsegment erfolgt, so wie es auch in Fign. 2 bis 4 bereits beschrieben ist. Unterschiedliche Informationen können somit leichter aufgrund ihrer verschiedenen Darstellungsformen voneinander abgegrenzt werden, was dem Benutzer unter Umständen eine Übersicht erleichtern kann.

In Fig. 6 kann im Mittelbereich 204 die Anzeige "GTE Mode" auf ein unmittelbar bevorstehendes oder gerade erfolgendes Umschalten in einen Modus hindeuten, bei dem lediglich der Verbrennungsmotor aktiv ist. Dabei kann es möglich sein, in einem weiteren Verlauf den schattierten Bruchteil 232 des zweiten Segments 208 auszublenden. Mit anderen Worten umfasst das zweite Segment 208 damit lediglich noch einen Bereich zwischen etwa der 8-Uhr-Position und der 9-Uhr-Position. Somit kann der Prozessor dazu ausgebildet sein, das Anzeigesignal derart zu erzeugen, dass das erste Segment 230 und/oder das zweite Segment 208 an einem Punkt innerhalb eines Winkelbereichs von höchstens 15° um eine 9-Uhr-Position des Anzeigebereichs 202 begrenzt werden.

Fign. 7 bis 9 stellen einen weiteren Betriebsmodus (Hybridmodus) dar, bei dem das Hybridfahrzeug durch den Elektromotor getrieben wird, und der Verbrennungsmotor zugeschaltet werden kann, sobald eine Maximalleistung des Elektromotors erreicht, aber unter Umständen eine höhere Leistung gewünscht ist. Dabei ist der Prozessor dazu ausgebildet, das Anzeigesignal derart zu erzeugen, dass die Drehzahl des Verbrennungsmotors in dem ersten Segment 230, eine Ladeleistung einer Batterie des Elektromotors in dem ersten Sektor 214 des zweiten Segments 208 und die Ausgangsleistung des Elektromotors in dem zweiten Sektor 216 des zweiten Segments 208 dargestellt werden. Dabei grenzen das erste Segment 230 und das zweite Segment 208 innerhalb eines Winkelbereichs von höchstens 15° um eine 12-Uhr-Position des Anzeigebereichs 202 aneinander. Der Teil der Skala 210, welcher die Drehzahl des Verbrennungsmotors anzeigt, kann bei einem Übergang von z. B. einem Unterstützungsmodus (engl. "Boost Mode" oder "Boosten") oder rein verbrennungsmotorischem Fahren in den Hybridmodus entlang des Umfangs des Anzeigebereichs 202 verschoben werden. Bei einigen Ausführungsbeispielen, wie dem Hybridmodus, können das erste Segment 230 und das zweite Segment 208 unmittelbar aneinander grenzen. Ferner kann ein Betriebsmodus, bei dem zumindest der Verbrennungsmotor aktiv ist, durch ein Batteriesymbol mit der Abkürzung "GTE" in dem ersten Sektor 214 angezeigt sein.

Bei manchen Ausführungsbeispielen ist der Prozessor dazu ausgebildet, das Anzeigesignal derart zu erzeugen, dass die entlang eines radial äußeren Perimeters des Anzeigebereichs 202 liegende Skala 210 einen zwischen einem Anfangspunkt 236 und einem Endpunkt 238 der Skala 210 gelegenen Mittelpunkt 240 aufweist, welcher eine maximale Ausgangsleistung des Elektromotors und einen Nullpunkt einer Drehzahl des Verbrennungsmotors markiert. Dabei zeigt der Zeiger 212 wenigstens die Höhe der Ausgangsleistung des Elektromotors mithilfe der Skala 210 an. Außerdem erstreckt sich eine Schattierung eines von der Ausgangsleistung des Elektromotors abhängigen Bruchteils 232 des zweiten Sektors 216 von dem Anfangspunkt 236 bis zu dem Zeiger 212, höchstens aber bis zu dem Mittelpunkt 240. Zudem zeigt der Zeiger 212 durch ein Überschreiten des Mittelpunktes 240 ein zusätzliches Zuschalten des Verbrennungsmotors bei der maximalen Ausgangsleistung des Elektromotors, und eine Drehzahl des Verbrennungsmotors mithilfe der Skala 210 an. So kann es möglich werden, die Informationsdichte auf der Anzeigeeinrichtung weiter zu erhöhen, und die Übersicht für den Benutzer womöglich intuitiver zu gestalten.

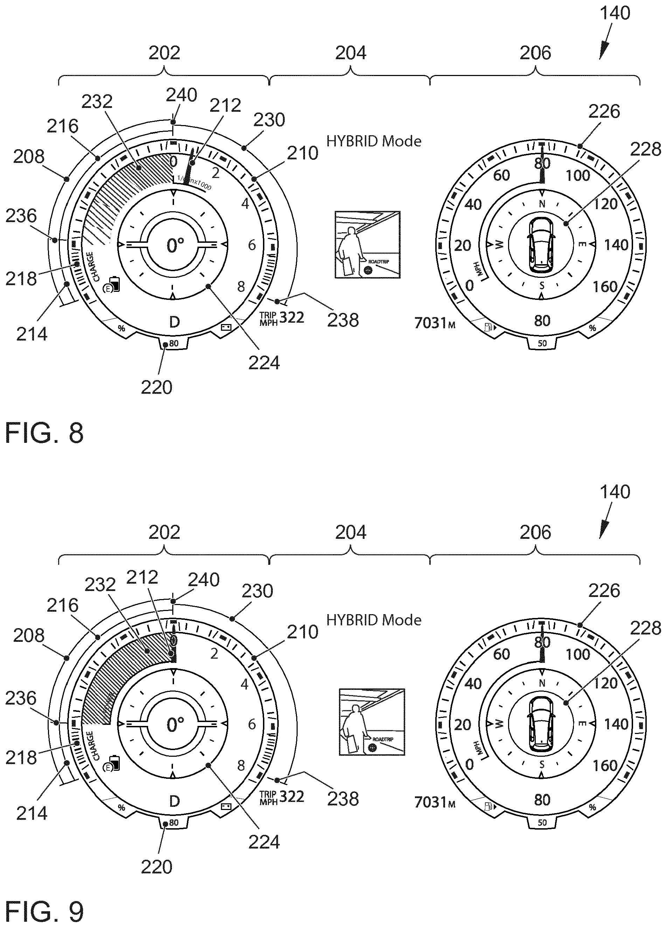

Fign. 7 und 9 zeigen einen Zustand, bei dem die Maximalleistung des Elektromotors gerade erreicht ist. Hierbei steht der Zeiger 212 auf dem Mittelpunkt 240 der Skala 210, der im Übrigen von einem geometrischen Mittelpunkt abweichen kann. Der schattierte Bruchteil 232 des zweiten Segments 208 wird durch den Zeiger begrenzt. Fig. 8 zeigt einen Zustand, bei dem eine Leistung oberhalb der Maximalleistung des Elektromotors in Anspruch genommen, und dadurch der Verbrennungsmotor zugeschaltet wird. Dies wird derart dargestellt, dass der Zeiger 212 den Mittelpunkt 240 überschreitet, und eine durch den Verbrennungsmotor erzeugte Drehzahl auf der Skala 210 anzeigt. Der schattierte Bruchteil 232 reicht dabei nicht mehr bis zu dem Zeiger 212, sondern wird durch den Mittelpunkt 240 begrenzt. Optional kann bei der Schattierung oder farblichen Hervorhebung des Bruchteils 232 ein Helligkeits-oder Farbübergang von dem Anfangspunkt 236 bis zu dem Mittelpunkt 240 dargestellt werden. In Fig. 7 zeigt der Mittelbereich 204 weiterhin eine Uhrzeit, und in Fig. 9 den aktuell vorliegenden Modus an.

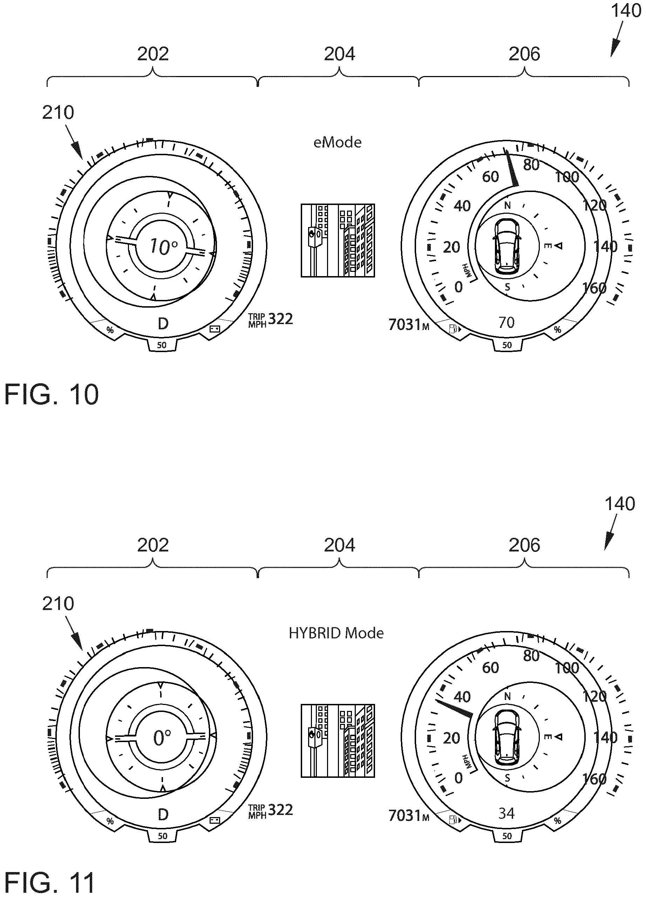

Fign. 10 und 11 zeigen beispielhaft, wie ein Wechsel von einem Modus in einen anderen Modus dargestellt wird. Hierzu kann durch den Benutzer zunächst ein Umschaltsignal ausgelöst werden, welches eine Einnahme eines neuen Betriebszustands, z. B. Aktivierung oder Deaktivierung, durch den Verbrennungsmotor oder Elektromotor bewirkt. Dadurch können sich die entsprechenden Betriebssignale (vgl. Fig. 1) ändern, und ein Umschaltsignal ausgelöst werden. Dieses bewirkt ein seitliches Verschieben der Skala 210 gegenüber dem in dem Anzeigebereich 202 visualisierten Rundinstrument. In verschobenem Zustand kann ferner eine Veränderung einer Einteilung der Skala 210 oder einer Ausdehnung der Skala 210 erfolgen. So unterscheiden sich beispielsweise die in Fig. 10 gezeigten Abstände zwischen Strichmarkierungen auf der Skala 210 von den in Fig. 11 gezeigten Abständen. Fig. 10 zeigt beispielsweise ein Beenden eines Elektro-Modus, und Fig. 11 einen Beginn eines Hybridmodus.

Gemäß einem weiteren Aspekt beziehen sich Ausführungsbeispiele auf eine Kontrollvorrichtung 100 für ein Informationswiedergabesystem zum Darstellen eines Betriebszustandes eines Hybridfahrzeugs, wie sie auch bereits Fig. 1 zeigt. Die Kontrollvorrichtung 100 umfasst eine Eingangsschnittstelle 105, die dazu ausgebildet ist, wenigstens ein erstes Betriebssignal 110, welches Informationen über einen Betriebszustand eines Verbrennungsmotors 115 des Hybridfahrzeugs umfasst, und ein zweites Betriebssignal 120, welches Informationen über einen Betriebszustand eines Elektromotors 125 des Hybridfahrzeugs umfasst, zu empfangen. Die Kontrollvorrichtung 100 umfasst zudem einen Prozessor 130, der dazu ausgebildet ist, ein Anzeigesignal 135 derart zu erzeugen, sodass von einer Anzeigeeinrichtung 140 eine Wiedergabe eines kreis- oder ringförmigen Anzeigebereichs bewirkt wird, innerhalb dessen (im Unterschied zu dem ersten Ausführungsbeispiel) in einem gemeinsamen Segment des kreis-oder ringförmigen Anzeigebereichs die Informationen über den Betriebszustand des Verbrennungsmotors 115 und die Informationen über den Betriebszustand des Elektromotors 125 dargestellt werden. Die Kontrollvorrichtung 100 umfasst außerdem eine Ausgangsschnittstelle 145, die dazu ausgebildet ist, das Anzeigesignal 135 an die Anzeigeeinrichtung 140 bereitzustellen. Somit kann es ermöglicht werden, eine Informationsdichte auf einer Anzeigeeinrichtung zu erhöhen, und dabei möglicherweise eine verbesserte Übersichtlichkeit für einen Benutzer zu bieten.

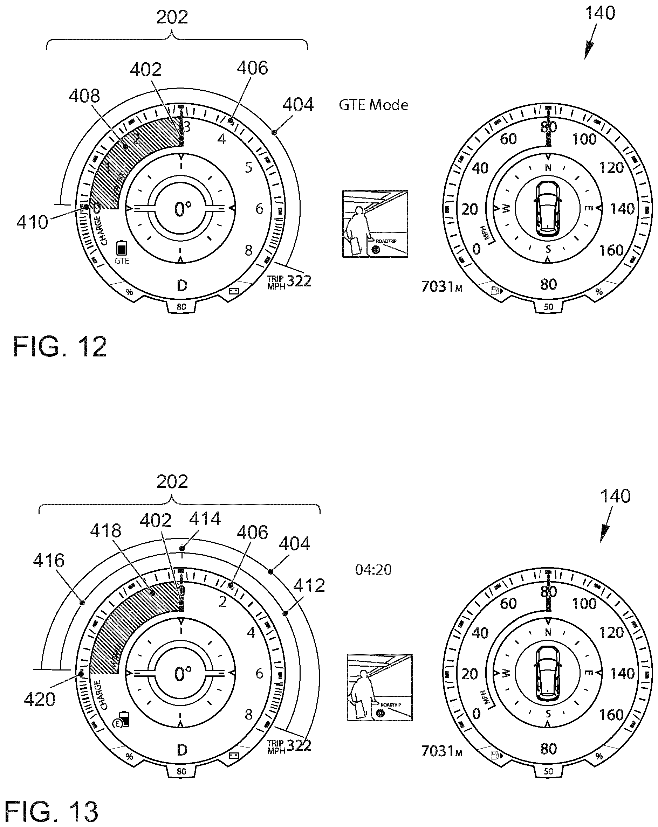

Mit anderen Worten erklärt kann bei solchen Ausführungsbeispielen ein Betriebsmodus, z. B. "Boosten" auf eine alternative Art dargestellt werden, wie Fig. 12 zeigt. Hierbei ist der Prozessor dazu ausgebildet, das Anzeigesignal derart zu erzeugen, dass die Drehzahl des Verbrennungsmotors vermittels eines Zeigers 402 und einer entlang eines radial äußeren Perimeters des gemeinsamen Segments 404 liegenden Skala 406, und eine gleichzeitige Beschleunigung mithilfe des Elektromotors durch eine innerhalb des äußeren Perimeters angeordneten Schattierung 408 zwischen einer Nullmarkierung 410 der Skala 406 und dem Zeiger 402 angezeigt werden. So kann es möglich werden, die Informationsdichte auf der Anzeigeeinrichtung weiter zu erhöhen, und die Übersicht für den Benutzer womöglich intuitiver zu gestalten.

Ferner kann bei einigen Ausführungsbeispielen der Betriebsmodus "Hybridmodus" auf eine alternative Art dargestellt werden, wie Fig. 13 zeigt. Hierbei ist der Prozessor dazu ausgebildet, das Anzeigesignal derart zu erzeugen, dass das gemeinsame Segment 404 einen ersten Teilbereich 412 und einen an einem Übergangspunkt 414 an den ersten Teilbereich 412 angrenzenden zweiten Teilbereich 416 aufweist. Dabei markiert der Übergangspunkt 414 eine maximale Ausgangsleistung des Elektromotors und einen Nullpunkt einer Drehzahl des Verbrennungsmotors. Außerdem zeigt ein Zeiger 402 wenigstens die Höhe der Ausgangsleistung des Elektromotors mithilfe einer Skala 406 entlang des gemeinsamen Segments 404 an. Zudem erstreckt sich eine Schattierung 418 eines von der Ausgangsleistung des Elektromotors abhängigen Bruchteils des zweiten Teilbereichs 416 von einem Anfangspunkt 420 des zweiten Teilbereichs 416 bis zu dem Zeiger 402 oder dem Übergangspunkt 414. Weiterhin zeigt der Zeiger 402 durch ein Überschreiten des Übergangspunktes 414 ein zusätzliches Zuschalten des Verbrennungsmotors bei der maximalen Ausgangsleistung des Elektromotors, und eine Drehzahl des Verbrennungsmotors mithilfe der Skala 406 an. So kann es möglich werden, die Informationsdichte auf der Anzeigeeinrichtung weiter zu erhöhen, und die Übersicht für den Benutzer womöglich intuitiver zu gestalten.

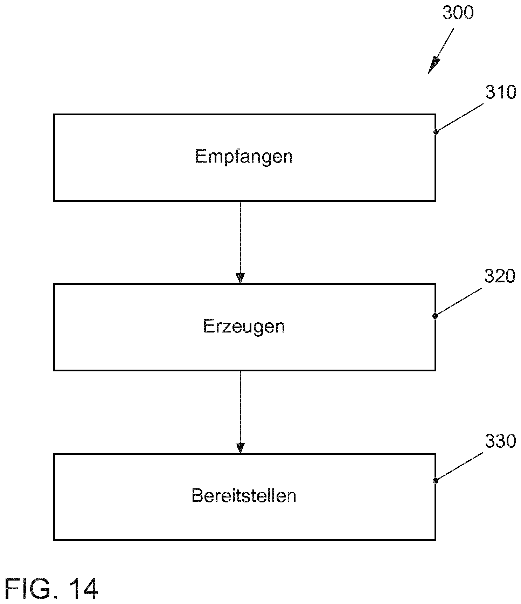

Fig. 14 zeigt ein Verfahren 300 zum Darstellen eines Betriebszustandes eines Hybridfahrzeugs gemäß einem Ausführungsbeispiel. Das Verfahren 300 umfasst ein Empfangen 310 wenigstens eines ersten Betriebssignals, welches Informationen über einen Betriebszustand eines Verbrennungsmotors des Hybridfahrzeugs umfasst, und eines zweiten Betriebssignals, welches Informationen über einen Betriebszustand eines Elektromotors des Hybridfahrzeugs umfasst. Das Verfahren 300 umfasst zudem ein Erzeugen 320 eines Anzeigesignals derart, sodass von einer Anzeigeeinrichtung eine Wiedergabe eines kreis- oder ringförmigen Anzeigebereichs bewirkt wird, innerhalb dessen in einem ersten Segment des kreis- oder ringförmigen Anzeigebereichs die Informationen über den Betriebszustand des Verbrennungsmotors und in einem zweiten Segment des kreis- oder ringförmigen Anzeigebereichs die Informationen über den Betriebszustand des Elektromotors dargestellt werden. Das Verfahren 300 umfasst weiterhin ein Bereitstellen 330 eines Anzeigesignals an die Anzeigeeinrichtung. Somit kann es ermöglicht werden, eine Informationsdichte auf einer Anzeigeeinrichtung zu erhöhen, und dabei möglicherweise eine verbesserte Übersichtlichkeit für einen Benutzer zu bieten.

Mit anderen Worten erklärt beziehen sich einige Ausführungsbeispiele auf eine Anzeigeeinrichtung in einem Fahrzeug mit einem Hybridantrieb, aufweisend eine Verbrennungskraftmaschine und mindestens einen Elektromotor, wobei auf der Anzeigeeinrichtung mindestens zwei Rundinstrumente darstellbar sind. Durch Ausführungsbeispiele kann es ermöglicht werden, einzelne Zustände des Hybridantriebes, wie elektrisch oder verbrennungsmotorisch Fahren, Laden der Batterie oder Boosten dem Benutzer vereinfacht oder verständlicher wiederzugeben.

Gemäß einigen Ausführungsbeispielen ist vorgesehen, dass mindestens eines der beiden Rundinstrumente, vorzugsweise beide Rundinstrumente eine innere und eine äußere Skala aufweisen. Auf der äußeren Skala des ersten Rundinstrumentes wird die Geschwindigkeit des Fahrzeuges dargestellt, die innere Skala wird vorzugsweise zur Nutzung von Fahrinformationen, wie zum Beispiel der gefahrenen Richtung genutzt.

Das zweite Rundinstrument wird zur Darstellung der Zustände der einzelnen Modi des Hybridantriebes genutzt. Beim rein elektrischen Fahren und Laden der Batterie ist dabei auf der äußeren Skala die Leistung der Batterie angegeben und der Zeiger zeigt die aktuelle Leistung der Batterie an (Fign. 2 - 4). Zur Anzeige des Boostens wechselt die Skala des Rundinstruments, und der Verbrauch des Verbrennungsmotors wird angezeigt. Des Weiteren kann vorgesehen sein, dass zur Darstellung eines weiteren Modus (z.B. Hybrid), die Skala für den Verbrauch des Verbrennungsmotors sich auf dem Umfang der Skala verschiebt, und zusätzlich die Leistung des Verbrennungsmotors auf dem verbleibenden Teil der Skala dargestellt wird, wobei der Zeiger jeweils anzeigt, ob im Moment der Elektroantrieb oder der Verbrennungsmotor das Fahrzeug antreibt.

Gemäß eines Aspekts einiger Ausführungsbeispiele wird der Wechsel der einzelnen Modi auf der Anzeigeeinrichtung durch ein kurzzeitiges Verschieben mindestens der beiden inneren Skalen der dargestellten Rundinstrumente gegenüber dem Mittelpunkt der Rundinstrumente und/oder eine Veränderung, insbesondere Drehung und/oder einen Einheitswechsel zumindest des Rundinstruments, mit dem die Modi des Hybridantriebes dargestellt werden, angezeigt. Die Dauer des Wechsels liegt vorzugsweise im Bereich von 1 bis 3 Sekunden.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Kontrollvorrichtung
- 105: Eingangsschnittstelle
- 110: Erstes Betriebssignal
- 115: Verbrennungsmotor
- 120: Zweites Betriebssignal
- 125: Elektromotor
- 130: Prozessor
- 135: Anzeigesignal
- 140: Anzeigeeinrichtung
- 145: Ausgangsschnittstelle
- 202: Kreis- oder ringförmiger Anzeigebereich
- 204: Mittlerer Bereich
- 206: Weiterer Bereich
- 208: Zweites Segment
- 210: Skala
- 212: Zeiger
- 214: Erster Sektor
- 216: Zweiter Sektor
- 218: Mehrzahl von Strichmarkierungen
- 220: Teilbereich
- 222: Teilmenge der Strichmarkierungen
- 224: Kreisförmiger Innenbereich
- 226: Ringförmiger Außenbereich
- 228: Innerer Kreisbereich
- 230: Erstes Segment
- 232: Bruchteil, schattiert
- 234: Nullmarkierung
- 236: Anfangspunkt
- 238: Endpunkt
- 240: Mittelpunkt
- 300: Verfahren
- 310: Empfangen
- 320: Erzeugen
- 330: Bereitstellen
- 402: Zeiger
- 404: Gemeinsames Segment
- 406: Skala
- 408: Schattierung
- 410: Nullmarkierung
- 412: Erster Teilbereich
- 414: Übergangspunkt
- 416: Zweiter Teilbereich
- 418: Schattierung
- 420: Anfangspunkt

## Patentansprüche

1. Kontrollvorrichtung (100) für ein Informationswiedergabesystem zum Darstellen eines Betriebszustandes eines Hybridfahrzeugs, umfassend:
eine Eingangsschnittstelle (105), die dazu ausgebildet ist, wenigstens ein erstes Betriebssignal (110), welches Informationen über einen Betriebszustand eines Verbrennungsmotors (115) des Hybridfahrzeugs umfasst, und ein zweites Betriebssignal (120), welches Informationen über einen Betriebszustand eines Elektromotors (125) des Hybridfahrzeugs umfasst, zu empfangen; und
einen Prozessor (130), der dazu ausgebildet ist, ein Anzeigesignal (135) derart zu erzeugen, sodass von einer Anzeigeeinrichtung (140) eine Wiedergabe eines kreis- oder ringförmigen Anzeigebereichs (202) bewirkt wird, innerhalb dessen in einem ersten Segment des kreis- oder ringförmigen Anzeigebereichs (202) die Informationen über den Betriebszustand des Verbrennungsmotors (115);
die Kontrollvorrichtung ist **dadurch gekennzeichnet dass**, in einem zweiten Segment des kreis-oder ringförmigen Anzeigebereichs (202) die Informationen über den Betriebszustand des Elektromotors (125) dargestellt werden; wobei der Prozessor (130) dazu ausgebildet ist, das Anzeigesignal (135) derart zu erzeugen, dass eine Drehzahl des Verbrennungsmotors (115) in dem ersten Segment (230) und eine Ladeleistung einer Batterie des Elektromotors (125) in einem ersten Sektor (214) des zweiten Segments (208) dargestellt werden, und, dass eine Ausgangsschnittstelle (145), die dazu ausgebildet ist, das Anzeigesignal (135) an die Anzeigeeinrichtung (140) bereitzustellen.

2. Kontrollvorrichtung (100) gemäß Anspruch 1, wobei der Prozessor (130) dazu ausgebildet ist, das Anzeigesignal (135) derart zu erzeugen, dass eine Darstellung der Informationen über den Betriebszustand des Elektromotors (125) dadurch erfolgt, dass ein von dem Betriebszustand abhängiger Bruchteil (232) des zweiten Segments (208) schattiert wird.

3. Kontrollvorrichtung (100) gemäß einem der vorangegangenen Ansprüche, wobei der Prozessor (130) dazu ausgebildet ist, das Anzeigesignal (135) derart zu erzeugen, dass das erste Segment (230) und das zweite Segment (208) unmittelbar aneinander angrenzen.

4. Kontrollvorrichtung (100) gemäß einem der vorangegangenen Ansprüche, wobei der Prozessor (130) dazu ausgebildet ist, das Anzeigesignal (135) derart zu erzeugen, dass das erste Segment (230) und/oder das zweite Segment (208) an einem Punkt innerhalb eines Winkelbereichs von höchstens 15° um eine 9-Uhr-Position des Anzeigebereichs (202) begrenzt werden.

5. Kontrollvorrichtung (100) gemäß einem der vorangegangenen Ansprüche, wobei der Prozessor (130) dazu ausgebildet ist, das Anzeigesignal (135) derart zu erzeugen, dass eine Ladeleistung einer Batterie des Elektromotors (125) in einem ersten Sektor (214) des zweiten Segments (208) und eine Ausgangsleistung des Elektromotors (125) in einem zweiten Sektor (216) des zweiten Segments (208) dargestellt werden.

6. Kontrollvorrichtung (100) gemäß Anspruch 5, wobei der Prozessor (130) dazu ausgebildet ist, das Anzeigesignal (135) derart zu erzeugen, dass ein von der Ausgangsleistung des Elektromotors (125) abhängiger Bruchteil (232) des zweiten Segments (208) schattiert ist, und eine Darstellung der Ladeleistung der Batterie des Elektromotors (125) mit einem durch eine Mehrzahl von Strichmarkierungen (218) dargestellten, diskretisierten Kreisringsegment erfolgt.

7. Kontrollvorrichtung (100) gemäß einem der Ansprüche 5 oder 6, wobei der Prozessor (130) dazu ausgebildet ist, das Anzeigesignal (135) derart zu erzeugen, dass eine entlang eines radial äußeren Perimeters des Anzeigebereichs (202) liegende Skala (210) einen zwischen einem Anfangspunkt (236) und einem Endpunkt (238) der Skala (210) gelegenen Mittelpunkt (240) aufweist, welcher eine maximale Ausgangsleistung des Elektromotors (125) und einen Nullpunkt einer Drehzahl des Verbrennungsmotors (115) markiert, wobei:
ein Zeiger (212) wenigstens die Höhe der Ausgangsleistung des Elektromotors (125) mithilfe der Skala (210) anzeigt;
sich eine Schattierung eines von der Ausgangsleistung des Elektromotors (125) abhängigen Bruchteils (232) des zweiten Sektors (216) von dem Anfangspunkt (236) bis zu dem Zeiger (212), höchstens aber bis zu dem Mittelpunkt (240) erstreckt; und
der Zeiger (212) durch ein Überschreiten des Mittelpunktes (240) ein zusätzliches Zuschalten des Verbrennungsmotors (115) bei der maximalen Ausgangsleistung des Elektromotors (125), und eine Drehzahl des Verbrennungsmotors (115) mithilfe der Skala (210) anzeigt.

8. Kontrollvorrichtung (100) gemäß einem der vorangegangenen Ansprüche, wobei der Prozessor (130) dazu ausgebildet ist, das Anzeigesignal (135) derart zu erzeugen, dass eine Ausgangsleistung des Elektromotors (125) in einem zweiten Sektor (216) des zweiten Segments (208) dargestellt wird, wobei das erste Segment (230) und der zweite Sektor (216) des zweiten Segments (208) sich wenigstens teilweise überlappen.

9. Kontrollvorrichtung (100) gemäß einem der vorhergehenden Ansprüche , wobei der Prozessor (130) dazu ausgebildet ist, das Anzeigesignal (135) derart zu erzeugen, dass die Drehzahl des Verbrennungsmotors (115) vermittels eines Zeigers (212) und einer entlang eines radial äußeren Perimeters des Anzeigebereichs (202) liegenden Skala (210), und eine gleichzeitige Beschleunigung mithilfe des Elektromotors (125) durch eine innerhalb des äußeren Perimeters angeordneten Schattierung zwischen einer Nullmarkierung (234) der Skala (210) und dem Zeiger (212) angezeigt werden.

10. Kontrollvorrichtung (100) gemäß einem der vorangegangenen Ansprüche, wobei der Prozessor (130) dazu ausgebildet ist, das Anzeigesignal (135) derart zu erzeugen, dass ein Ladezustand einer Batterie des Elektromotors (125) in einem eine 6-Uhr-Position des Anzeigebereichs (202) umfassenden Teilbereich (220) angezeigt wird.

11. Verfahren (300) zum Darstellen eines Betriebszustandes eines Hybridfahrzeugs, umfassend:
Empfangen (310) wenigstens eines ersten Betriebssignals, welches Informationen über einen Betriebszustand eines Verbrennungsmotors des Hybridfahrzeugs umfasst, und eines zweiten Betriebssignals, welches Informationen über einen Betriebszustand eines Elektromotors des Hybridfahrzeugs umfasst;
Erzeugen (320) eines Anzeigesignals derart, sodass von einer Anzeigeeinrichtung eine Wiedergabe eines kreis- oder ringförmigen Anzeigebereichs bewirkt wird, innerhalb dessen in einem ersten Segment des kreis- oder ringförmigen Anzeigebereichs die Informationen über den Betriebszustand des Verbrennungsmotors und in einem zweiten Segment des kreis- oder ringförmigen Anzeigebereichs die Informationen über den Betriebszustand des Elektromotors dargestellt werden, wobei eine Drehzahl des Verbrennungsmotors (115) in dem ersten Segment (230) und eine Ladeleistung einer Batterie des Elektromotors (125) in einem ersten Sektor (214) des zweiten Segments (208) dargestellt werden; und
Bereitstellen (330) eines Anzeigesignals an die Anzeigeeinrichtung.

12. Programm mit einem Programmcode zum Durchführen des Verfahrens gemäß Anspruch 11, wenn der Programmcode auf einem Computer, einem Prozessor oder einer programmierbaren Hardwarekomponente ausgeführt wird.

## Claims

1. Controlling device (100) for an information display system for displaying an operating condition of a hybrid vehicle, comprising:
an input interface (105) that is designed to receive at least one first operating signal (110) comprising information about an operating condition of an internal combustion engine (115) of the hybrid vehicle, and a second operating signal (120) comprising information about an operating condition of an electric motor (125) of the hybrid vehicle; and
a processor (130) that is designed to generate a display signal (135), such that a display device (140) produces a rendering of a circular or annular display area (202) within which the information about the operating condition of the internal combustion engine (115) in a first segment of the circular or annular display area (202);
the controlling device is **characterized in that** the information about the operating condition of the electric motor (125) is displayed in a second segment of the circular or annular display area (202); wherein the processor (130) is designed to generate the display signal (135) such that a rotational speed of the internal combustion engine (115) is displayed in the first segment (230) and a charging power of a battery of the electric motor (125) is displayed in a first sector (214) of the second segment (208), and **in that**
an output interface (145) is designed to provide the display signal (135) to the display device (140).

2. Controlling device (100) according to claim 1, wherein the processor (130) is designed to generate the display signal (135) such that a display of the information about the operating condition of the electric motor (125) takes place in that a fraction (232) of the second segment (208) is shaded, said fraction being dependent on the operating condition.

3. Controlling device (100) according to any one of the preceding claims, wherein the processor (130) is designed to generate the display signal (135) such that the first segment (230) and the second segment (208) are directly adjacent to each other.

4. Controlling device (100) according to any one of the preceding claims, wherein the processor (130) is designed to generate the display signal (135) such that the first segment (230) and/or the second segment (208) are limited to a point within an angular range of at most 15° around a 9 o'clock position of the display area (202).

5. Controlling device (100) according to any one of the preceding claims, wherein the processor (130) is designed to generate the display signal (135) such that a charging power of a battery of the electric motor (125) is displayed in a first sector (214) of the second segment (208), and an output power of the electric motor (125) is displayed in a second sector (216) of the second segment (208).

6. Controlling device (100) according to claim 5, wherein the processor (130) is designed to generate the display signal (135) such that a fraction (232) of the second segment (208) is shaded, said fraction being dependent on the output power of the electric motor (125), and the charging power of the battery of the electric motor (125) is displayed with a discretized circular ring segment represented by a plurality of line marks (218).

7. Controlling device (100) according to any one of claims 5 or 6, wherein the processor (130) is designed to generate the display signal (135) such that a scale (210) lying along a radially outer perimeter of the display area (202) has a center point (240) situated between a starting point (236) and an end point (238) of said scale (210) and marking a maximum output power of the electric motor (125) and a zero point of a rotational speed of the internal combustion engine (115), wherein:
a pointer (212) indicates at least the magnitude of the output power of the electric motor (125) by means of the scale (210);
a shading of a fraction (232) of the second sector (216), said fraction being dependent on the output power of the electric motor (125), extends from the starting point (236) up to the pointer (212), but at most up to the center point (240); and
by exceeding the center point (240), the pointer (212) indicates an additional connection of the internal combustion engine (115) at the maximum output power of the electric motor (125) and a rotational speed of the internal combustion engine (115) by means of the scale (210).

8. Controlling device (100) according to any one of the preceding claims, wherein the processor (130) is designed to generate the display signal (135) such that an output power of the electric motor (125) is displayed in a second sector (216) of the second segment (208), wherein the first segment (230) and the second sector (216) of the second segment (208) at least partially overlap.

9. Controlling device (100) according to any one of the preceding claims, wherein the processor (130) is designed to generate the display signal (135) such that the rotational speed of the internal combustion engine (115) is indicated by means of a pointer (212) and a scale (210) lying along a radially outer perimeter of the display area (202), and a simultaneous acceleration by means of the electric motor (125) is indicated by a shading arranged within the outer perimeter between a zero mark (234) of the scale (210) and the pointer (212).

10. Controlling device (100) according to any one of the preceding claims, wherein the processor (130) is designed to generate the display signal (135) such that a charging state of a battery of the electric motor (125) is indicated in a partial area (220) comprising a 6 o'clock position of the display area (202).

11. Method (300) for displaying an operating condition of a hybrid vehicle, comprising:
receiving (310) at least one first operating signal comprising information about an operating condition of an internal combustion engine of the hybrid vehicle, and a second operating signal comprising information about an operating condition of an electric motor of the hybrid vehicle;
generating (320) a display signal such that a display device produces a rendering of a circular or annular display area within which the information about the operating condition of the internal combustion engine is displayed in a first segment of the circular or annular display area and the information about the operating condition of the electric motor is displayed in a second segment of the circular or annular display area, wherein a rotational speed of the internal combustion engine (115) is displayed in the first segment (230) and a charging power of a battery of the electric motor (125) is displayed in a first sector (214) of the second segment (208); and
providing (330) a display signal to the display device.

12. Program having a program code for performing the method according to claim 11 when the program code is executed on a computer, a processor, or a programmable hardware component.

## Revendications

1. Dispositif de contrôle (100) pour un système de transmission d'informations destiné à représenter un état de fonctionnement d'un véhicule hybride, comprenant :
une interface d'entrée (105), conçue pour recevoir au moins un premier signal de fonctionnement (110), qui comprend des informations relatives à un état de fonctionnement d'un moteur à combustion interne (115) du véhicule hybride, et un deuxième signal de fonctionnement (120), qui comprend des informations relatives à un moteur électrique (125) du véhicule hybride ; et
un processeur (130), conçu pour produire un signal d'affichage (135) de telle sorte qu'une reproduction d'une zone d'affichage (202) de forme circulaire ou annulaire soit provoquée par un dispositif d'affichage (140), à l'intérieur de laquelle les informations relatives à l'état de fonctionnement du moteur à combustion interne (115) dans un premier segment de la zone d'affichage (202) de forme circulaire ou annulaire sont représentées ;
le dispositif de contrôle est **caractérisé en ce que** dans un deuxième segment de la zone d'affichage (202) de forme circulaire ou annulaire, les informations relatives à l'état de fonctionnement du moteur électrique (125) sont représentées ; dans lequel le processeur (130) est conçu pour produire le signal d'affichage (135) de telle sorte qu'un régime du moteur à combustion interne (115) soit représenté dans le premier segment (230) et une puissance de charge d'une batterie du moteur électrique (125) soit représentée dans un premier secteur (214) du deuxième segment (208), et
une interface de sortie (145), conçue pour mettre à disposition le signal d'affichage (135) au niveau du dispositif d'affichage (140).

2. Dispositif de contrôle (100) selon la revendication 1, dans lequel le processeur (130) est conçu pour produire le signal d'affichage (135) de telle sorte qu'une représentation des informations relatives à l'état de fonctionnement du moteur électrique (125) soit effectuée en ombrageant une fraction (232) du deuxième segment (208) dépendant de l'état de fonctionnement.

3. Dispositif de contrôle (100) selon l'une quelconque des revendications précédentes, dans lequel le processeur (130) est conçu pour produire le signal d'affichage (135) de telle sorte que le premier segment (230) et le deuxième segment (208) soient directement contigus.

4. Dispositif de contrôle (100) selon l'une quelconque des revendications précédentes, dans lequel le processeur (130) est conçu pour produire le signal d'affichage (135) de telle sorte que le premier segment (230) et/ou le deuxième segment (208) soient délimités au niveau d'un point à l'intérieur d'une zone angulaire d'au plus 15° autour d'une position à 9 heures de la zone d'affichage (202).

5. Dispositif de contrôle (100) selon l'une quelconque des revendications précédentes, dans lequel le processeur (130) est conçu pour produire le signal d'affichage (135) de telle sorte qu'une puissance de charge d'une batterie du moteur électrique (125) soit représentée dans un premier secteur (214) du deuxième segment (208) et une puissance de sortie du moteur électrique (125) soit représentée dans un deuxième secteur (216) du deuxième segment (208).

6. Dispositif de contrôle (100) selon la revendication 5, dans lequel le processeur (130) est conçu pour produire le signal d'affichage (135) de telle sorte qu'une fraction (232) du deuxième segment (208) dépendant de la puissance de sortie du moteur électrique (125) soit ombragée et qu'une représentation de la puissance de charge de la batterie du moteur électrique (125) soit effectuée avec un segment d'anneau circulaire discrétisé représenté par une pluralité de marquages en trait (218).

7. Dispositif de contrôle (100) selon l'une quelconque des revendications 5 ou 6, dans lequel le processeur (130) est conçu pour produire le signal d'affichage (135) de telle sorte qu'une échelle (210) se trouvant le long d'un périmètre externe radial de la zone d'affichage (202) présente un point intermédiaire (240) disposé entre un point de départ (236) et un point de fin (238) de l'échelle (210), qui marque une puissance de sortie maximale du moteur électrique (125) et un point nul du régime du moteur à combustion interne (115), dans lequel :
un pointeur (212) affiche au moins la hauteur de la puissance de sortie du moteur électrique (125) à l'aide de l'échelle (210) ;
un ombrage d'une fraction (232) du deuxième secteur (216) dépendant de la puissance de sortie du moteur électrique (125) s'étend jusqu'au pointeur (212), au maximum cependant jusqu'au point intermédiaire (240) ; et
le pointeur (212) affiche, par un dépassement du point intermédiaire (240), une mise en marche supplémentaire du moteur à combustion interne (115) à la puissance de sortie maximale du moteur électrique (125) et un régime du moteur à combustion interne (115) à l'aide de l'échelle (210).

8. Dispositif de contrôle (100) selon l'une quelconque des revendications précédentes, dans lequel le processeur (130) est conçu pour produire le signal d'affichage (135) de telle sorte qu'une puissance de sortie du moteur électrique (125) soit représentée dans un deuxième secteur (216) du deuxième segment (208), le premier segment (230) et le deuxième secteur (216) du deuxième segment (208) se chevauchant au moins partiellement.

9. Dispositif de contrôle (100) selon l'une quelconque des revendications précédentes, dans lequel le processeur (130) est conçu pour produire le signal d'affichage (135) de telle sorte que le régime du moteur à combustion interne (115) soit affiché au moyen d'un pointeur (212) et d'une échelle (210) se trouvant le long d'un périmètre radial externe de la zone d'affichage (202) et qu'une accélération simultanée à l'aide du moteur électrique (125) soit affichée par un ombrage disposé à l'intérieur du périmètre externe entre un marquage nul (234) de l'échelle (210) et le pointeur (212).

10. Dispositif de contrôle (100) selon l'une quelconque des revendications précédentes, dans lequel le processeur (130) est conçu pour produire le signal d'affichage (135) de telle sorte qu'un état de charge d'une batterie du moteur électrique (125) soit affiché dans une zone partielle (220) comprenant une position à 6 heures de la zone d'affichage (202).

11. Procédé (300) destiné à représenter un état de fonctionnement d'un véhicule hybride, comprenant :
la réception (310) d'au moins un premier signal de fonctionnement, qui comprend des informations relatives à un état de fonctionnement d'un moteur à combustion interne du véhicule hybride et un deuxième signal de fonctionnement, qui comprend des informations relatives à un état de fonctionnement d'un moteur électrique du véhicule hybride ;
la production (320) d'un signal d'affichage, de sorte qu'une reproduction d'une zone d'affichage de forme circulaire ou annulaire soit provoquée par un dispositif d'affichage, à l'intérieur de laquelle les informations relatives à l'état de fonctionnement du moteur à combustion interne soient représentées dans un premier segment de la zone d'affichage de forme circulaire ou annulaire et les informations relatives à l'état de fonctionnement du moteur électrique soient représentées dans un deuxième segment de la zone d'affichage de forme circulaire ou annulaire, un régime du moteur à combustion interne (115) étant représenté dans le premier segment (230) et une puissance de charge d'une batterie du moteur électrique (125) étant représentée dans un premier secteur (214) du deuxième segment (208) ; et
la fourniture (330) d'un signal d'affichage au dispositif d'affichage.

12. Programme contenant un code de programme destiné à mettre en oeuvre le procédé selon la revendication 11, lorsque le code de programme est exécuté sur un ordinateur, un processeur ou un composant matériel programmable.
